# EUROPEAN PATENT APPLICATION

(11) **EP 4 376 143 A2**
(43) Date of publication of application: **29.05.2024**
(21) Application number: 23207168.8
(22) Date of filing: 31.10.2023
(51) Int. Cl.: H01M 10/04, H01M 50/103, H01M 50/186, H01M 50/471

(54) **POWER STORAGE MODULE**

(30) Priority: 24.11.2022 JP 2022187647
(71) Applicant: TOYOTA JIDOSHA KABUSHIKI KAISHA, Toyota-shi, Aichi-ken, 471-8571 (JP)
(72) Inventor: TAKASU, Junta, Toyota-shi, 471-8571 (JP)
(74) Representative: D Young & Co LLP

(57) **Abstract**

A power storage module (1) includes an electrode laminate (10) having a plurality of bipolar electrodes (100), a positive terminal electrode (200), and a negative terminal electrode (300), a sealing portion (500), and a buffer region formation member (600) that forms a sealed buffer region (R2). Each bipolar electrode (100) has a current collector (110), a positive electrode active material layer (120), and a negative electrode active material layer (130). Positive terminal electrode (200) has a positive electrode current collector foil (112) and positive electrode active material layer (120). Negative terminal electrode (300) has a negative electrode current collector foil (113) and negative electrode active material layer (130). Sealing portion (500) seals a region (R1) formed between a positive electrode uncoated portion (112b) and a negative electrode uncoated portion (113b) in a state where becomes a pressure within region (R1) is lower than atmospheric pressure. Buffer region formation member (600) forms a buffer region (R2) at a position overlapping region (R1) in a stacking direction.

## Description

### CROSS REFERENCE TO RELATED APPLICATIONS

This nonprovisional application is based on Japanese Patent Application No. 2022-187647 filed on November 24, 2022, with the Japan Patent Office, the entire contents of which are hereby incorporated by reference.

### BACKGROUND

### Field

The present disclosure relates to a power storage module.

### Description of the Background Art

Japanese Patent Laying-Open No. 2021-128898 discloses a power storage module that includes a plurality of bipolar electrodes, a plurality of separators disposed between mutually adjacent bipolar electrodes, a sealing portion that seals a space formed between mutually adjacent bipolar electrodes, and an electrolyte solution disposed in this space. When viewed from a stacking direction, the separators have an overlapping portion that overlaps an electrode layer in the bipolar electrodes, and an exposed portion that does not overlap the electrode layer. A region where the exposed portion is present has a function for accommodating gas produced from electrodes at the time of charging and discharging.

### SUMMARY

In the power storage module described in Japanese Patent Laying-Open No. 2021-128898, there may be cases where the inside of the power storage module is decompressed to less than atmospheric pressure, and in this case, an electrode disposed on the outermost side in the stacking direction may be deformed inwardly in the stacking direction due to an internal and external differential pressure of the power storage module.

On the other hand, since the region of the separators where the exposed portion is present has a function as a gas pocket for accommodating gas produced from electrodes at the time of charging and discharging, in the case where an electrode disposed on the outermost side in the stacking direction is deformed inwardly, the volume of the gas pocket reduces.

The objective of the present disclosure is to provide a power storage module capable of suppressing a reduction in volume of a gas pocket.

A power storage module according to one aspect of the present disclosure includes an electrode laminate having a plurality of mutually stacked bipolar electrodes, a positive terminal electrode disposed on one side of the plurality of bipolar electrodes in a stacking direction of the plurality of bipolar electrodes, and a negative terminal electrode disposed on the other side of the plurality of bipolar electrodes in the stacking direction, a sealing portion that seals a pair of electrodes mutually adjacent in the stacking direction of the electrode laminate, and a buffer region formation member for forming a buffer region sealed on an outside of the electrode laminate in the stacking direction, each of the plurality of bipolar electrodes has a current collector including a positive electrode current collector foil and a negative electrode current collector foil, a positive electrode active material layer provided on the positive electrode current collector foil in the current collector, and a negative electrode active material layer provided on the negative electrode current collector foil in the current collector, the positive terminal electrode has a positive electrode current collector foil, and a positive electrode active material layer provided on the positive electrode current collector foil, the negative terminal electrode has a negative electrode current collector foil, and a negative electrode active material layer provided on the negative electrode current collector foil, the positive electrode current collector foil in each of the current collectors and the positive electrode current collector foil in the positive terminal electrode have a positive electrode coated portion on which the positive electrode active material layer is provided, and a positive electrode uncoated portion on which the positive electrode active material layer is not provided, the negative electrode current collector foil in each of the current collectors and the negative electrode current collector foil in the negative terminal electrode have a negative electrode coated portion on which the negative electrode active material layer is provided, and a negative electrode uncoated portion facing the positive electrode uncoated portion in the stacking direction and on which the negative electrode active material layer is not provided, the sealing portion seals a region formed between the positive electrode uncoated portion and the negative electrode uncoated portion in a state where a pressure within the region is less than atmospheric pressure, and the buffer region formation member forms the buffer region at a position overlapping the region in the stacking direction.

The foregoing and other objects, features, aspects and advantages of the present disclosure will become more apparent from the following detailed description of the present disclosure when taken in conjunction with the accompanying drawings.

### BRIEF DESCRIPTION OF THE DRAWINGS

Fig. 1 is a perspective view schematically showing a power storage module in a first embodiment of the present disclosure.
Fig. 2 is a cross-sectional view at an II-II line in Fig. 1.
Fig. 3 is a perspective view schematically showing a power storage module in a second embodiment of the present disclosure.
Fig. 4 is a cross-sectional view at an IV-IV line in Fig. 3.

### DESCRIPTION OF THE PREFERRED EMBODIMENTS

Hereinafter, embodiments of the present disclosure will be described with reference to the figures. Note that, the same reference numerals are attached to same or corresponding members within the figures referred to hereinafter.

### (First Embodiment)

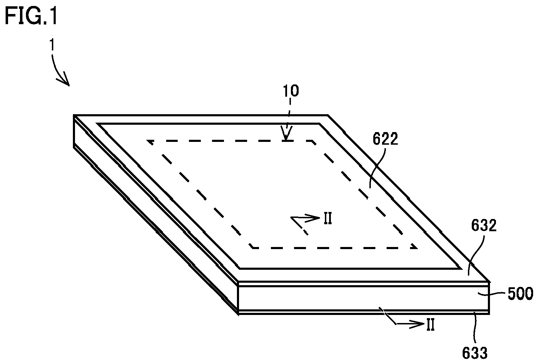

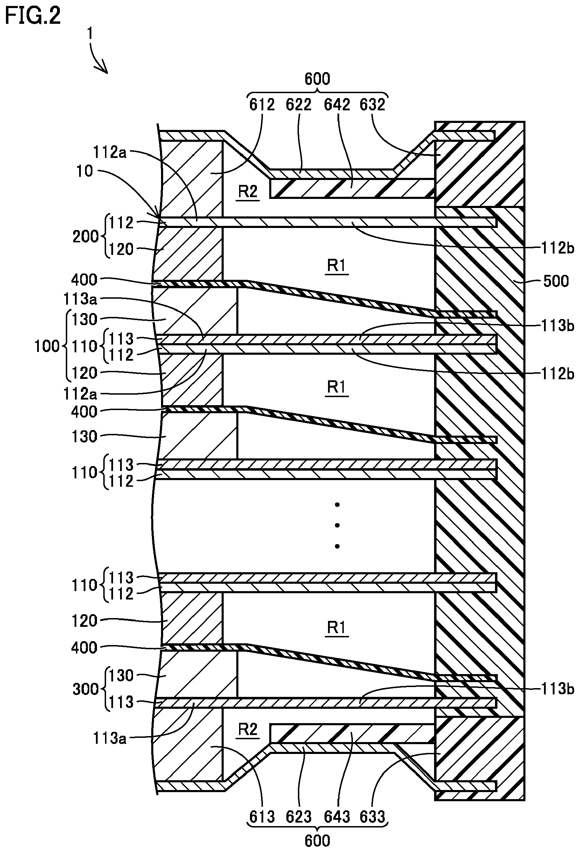

Fig. 1 is a perspective view schematically showing a power storage module in a first embodiment of the present disclosure. Fig. 2 is a cross-sectional view at an II-II line in Fig. 1. As shown in Fig. 1 and Fig. 2, a power storage module 1 includes an electrode laminate 10, a plurality of separators 400, a sealing portion 500, and a buffer region formation member 600.

Electrode laminate 10 has a plurality of bipolar electrodes 100, a positive terminal electrode 200, and a negative terminal electrode 300.

Plurality of bipolar electrodes 100 are mutually stacked. As shown in Fig. 2, each bipolar electrode 100 has a current collector 110, a positive electrode active material layer 120, and a negative electrode active material layer 130.

Current collector 110 is made of metal, and is, for example, formed in a rectangular shape. Current collector 110 has a positive electrode current collector foil 112 and a negative electrode current collector foil 113. Positive electrode current collector foil 112 is, for example, made of aluminum. Negative electrode current collector foil 113 is, for example, made of copper foil. Negative electrode current collector foil 113 is adhered to positive electrode current collector foil 112 by a conductive adhesive.

Positive electrode active material layer 120 is provided on one surface in current collector 110, namely, on the surface of positive electrode current collector foil 112. Negative electrode active material layer 130 is provided on the other surface in current collector 110, namely, on the surface of negative electrode current collector foil 113.

Plurality of bipolar electrodes 100 are stacked such that positive electrode active material layer 120 in one of bipolar electrodes 100, and negative electrode active material layer 130 in bipolar electrode 100 adjacent to one bipolar electrode 100, are facing each other.

Positive terminal electrode 200 is disposed on one side of plurality of bipolar electrodes 100 in a stacking direction. Positive terminal electrode 200 has positive electrode current collector foil 112, and positive electrode active material layer 120 provided on positive electrode current collector foil 112. The configuration of positive electrode current collector foil 112 and positive electrode active material layer 120 in positive terminal electrode 200 is the same as that in bipolar electrode 100.

Negative terminal electrode 300 is disposed on the other side of plurality of bipolar electrodes 100 in the stacking direction. Negative terminal electrode 300 has negative electrode current collector foil 113, and negative electrode active material layer 130 provided on negative electrode current collector foil 113. The configuration of negative electrode current collector foil 113 and negative electrode active material layer 130 in negative terminal electrode 300 is the same as that in bipolar electrode 100.

Positive electrode current collector foil 112 in each bipolar electrode 100 and positive electrode current collector foil 112 in positive terminal electrode 200 have a positive electrode coated portion 112a and a positive electrode uncoated portion 112b.

Positive electrode coated portion 112a is a part where positive electrode active material layer 120 is provided.

Positive electrode uncoated portion 112b is a part where positive electrode active material layer 120 is not provided, namely, a part where positive electrode current collector foil 112 is exposed.

Negative electrode current collector foil 113 in each bipolar electrode 100 and negative electrode current collector foil 113 in negative terminal electrode 300 have a negative electrode coated portion 113a and a negative electrode uncoated portion 113b.

Negative electrode coated portion 113a is a part where negative electrode active material layer 130 is provided.

Negative electrode uncoated portion 113b is a portion where negative electrode active material layer 130 is not provided, namely, a part where negative electrode current collector foil 113 is exposed. Negative electrode uncoated portion 113b faces positive electrode uncoated portion 112b in the stacking direction.

Each separator 400 is disposed between pairs electrodes 100, 200, and 300 mutually adjacent in the stacking direction. Specifically, each separator 400 is disposed between positive electrode active material layer 120 and negative electrode active material layer 130. Each separator 400 is made of an insulating material, and allows the permeation of ions. A polyolefin microporous film or the like is provided as each separator 400.

Sealing portion 500 is made of an insulating material (resin or the like). Sealing portion 500 seals between pairs of electrodes 100, 200, and 300 mutually adjacent in the stacking direction of electrode laminate 10. More specifically, sealing portion 500 seals a region R1 (refer to Fig. 2), which is formed between positive electrode uncoated portion 112b and negative electrode uncoated portion 113b, in a state where pressure within region R1 is lower than atmospheric pressure. An electrolyte solution is sealed in region R1. Sealing portion 500 holds a peripheral edge portion of each current collector foil 112 and 113 and a peripheral edge portion of each separator 400. Sealing portion 500 has a function for preventing leakage of the electrolyte solution from region R1 and infiltration of moisture from the outside to region R1, and a function for securing a gap between positive electrode uncoated portion 112b and negative electrode uncoated portion 113b disposed so as to sandwich region R1. Region R1 has a function as a gas pocket for accommodating gas produced from each electrode 100, 200, and 300 at the time of charging and discharging.

Buffer region formation member 600 forms a buffer region R2 (refer to Fig. 2) sealed on the outside of electrode laminate 10 in the stacking direction. As shown in Fig. 2, buffer region formation member 600 forms a buffer region R2 at a position overlapping region R1 in the stacking direction. Buffer region formation member 600 has a positive electrode side conductive member 612, a positive electrode side conductive film 622, a positive electrode side holding portion 632, a positive electrode side support portion 642, a negative electrode side conductive member 613, a negative electrode side conductive film 623, a negative electrode side holding portion 633, and a negative electrode side support portion 643.

Positive electrode side conductive member 612 is disposed so as to contact an outer surface of positive electrode coated portion 112a in positive terminal electrode 200. Positive electrode side conductive member 612 is formed in a flat plate shape. Positive electrode side conductive member 612 is made of aluminum, copper or the like.

Positive electrode side conductive film 622 covers positive electrode side conductive member 612. Positive electrode side conductive film 622 covers the entire region of an outer surface of positive electrode side conductive member 612. Positive electrode side conductive film 622 is made of aluminum or the like.

Positive electrode side holding portion 632 holds a peripheral edge portion of positive electrode side conductive film 622 so as to form buffer region R2 along with positive electrode uncoated portion 112b of positive terminal electrode 200, positive electrode side conductive member 612, and positive electrode side conductive film 622. Positive electrode side holding portion 632 is made of an insulating material (resin or the like). Positive electrode side holding portion 632 is connected to an outer end surface of sealing portion 500 in the stacking direction. Positive electrode side holding portion 632 is made of a same material as sealing portion 500, and may be formed integrally with sealing portion 500.

As shown in Fig. 2, the part prescribing buffer region R2 of positive electrode side conductive film 622 (the part between positive electrode side conductive member 612 and positive electrode side holding portion 632) deforms inwardly in the stacking direction due to a differential pressure between atmospheric pressure and the pressure within region R1.

Positive electrode side support portion 642 is disposed between positive electrode uncoated portion 112b of positive terminal electrode 200 and positive electrode side conductive film 622. Positive electrode side support portion 642 supports positive electrode side conductive film 622. Positive electrode side support portion 642 is made of an insulating material (resin or the like). Positive electrode side support portion 642 has a shape that extends from positive electrode side holding portion 632 toward positive electrode side conductive member 612. Positive electrode side support portion 642 is made of a same material as positive electrode side holding portion 632, and may be formed integrally with positive electrode side holding portion 632. Positive electrode side support portion 642 is set to a rigidity to the extent that can support positive electrode side conductive film 622 deformed inwardly in the stacking direction. Positive electrode side support portion 642 may contact positive electrode uncoated portion 112b in positive terminal electrode 200, or may be separated from contact positive electrode uncoated portion 112b.

Negative electrode side conductive member 613, negative electrode side conductive film 623, negative electrode side holding portion 633, and negative electrode side support portion 643 respectively have configurations corresponding to positive electrode side conductive member 612, positive electrode side conductive film 622, positive electrode side holding portion 632, and positive electrode side support portion 642. Accordingly, descriptions of negative electrode side conductive member 613, negative electrode side conductive film 623, negative electrode side holding portion 633, and negative electrode side support portion 643 are omitted.

Negative electrode side conductive member 613 is disposed so as to contact an outer surface of negative electrode coated portion 113a in negative terminal electrode 300.

Negative electrode side conductive film 623 covers negative electrode side conductive member 613.

Negative electrode side holding portion 633 holds a peripheral edge portion of negative electrode side conductive film 623 so as to form buffer region R2 along with negative electrode uncoated portion 113b of negative terminal electrode 300, negative electrode side conductive member 613, and negative electrode side conductive film 623.

Negative electrode side support portion 643 is disposed between negative electrode uncoated portion 113b of negative terminal electrode 300 and negative electrode side conductive film 623. Negative electrode side support portion 643 supports negative electrode side conductive film 623.

As described above, in power storage module 1 in the present embodiment, since buffer region R2 sealed at a position overlapping in the stacking direction with region R1, which is sealed in a state where a pressure within region R1 is lower than atmospheric pressure, is formed, and buffer region R2 absorbs a differential pressure between atmospheric pressure and the pressure within region R1, uncoated portions 112b and 113b in each terminal electrode 200 and 300 are prevented from coming close to uncoated portions 112b and 113b in bipolar electrode 100 facing uncoated portions 112b and 113b, namely, a reduction in the volume of a gas pocket is suppressed.

Moreover, uncoated portions 112b and 113b in each terminal electrode 200 and 300 are prevented from coming into contact (the occurrence of a short circuit) with uncoated portions 112b and 113b in bipolar electrode 100 facing uncoated portions 112b and 113b.

### (Second Embodiment)

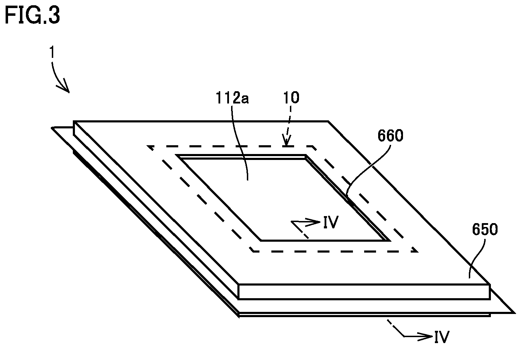

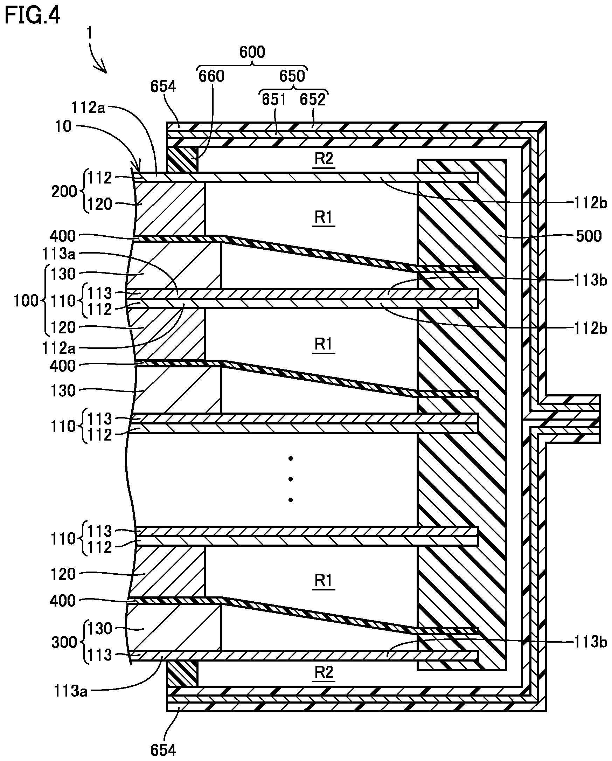

Next, power storage module 1 in a second embodiment of the present disclosure will be described, with reference to Fig. 3 and Fig. 4. Note that, in the second embodiment, only portions different from those of the first embodiment are described, and descriptions of the same structures, actions, and effects as those of the first embodiment are not repeated.

In the present embodiment, buffer region formation member 600 has a cover 650 and a seal portion 660.

Cover 650 covers sealing portion 500. Cover 650 is formed by a so-called aluminum laminate film. Namely, cover 650 has an aluminum layer 651, and a resin layer 652 that covers a front surface and a rear surface of aluminum layer 651. Cover 650 has an inside edge portion 654 formed at a position overlapping in the stacking direction with positive electrode coated portion 112a and negative electrode coated portion 113a. In other words, cover 650 covers the entire region of an outer surface of positive electrode uncoated portion 112b in positive terminal electrode 200 and the entire region of an outer surface of negative electrode uncoated portion 113b in negative terminal electrode 300.

Seal portion 660 connects cover 650 to electrode laminate 10. Specifically, seal portion 660 connects inside edge portion 654 to positive electrode coated portion 112a in positive terminal electrode 200 and negative electrode coated portion 113a in negative terminal electrode 300.

The above-stated exemplified embodiments and examples are understood by a person skilled in the art, with the following specific aspects.

### [Aspect 1]

A power storage module, including:
an electrode laminate having a plurality of mutually stacked bipolar electrodes, a positive terminal electrode disposed on one side of the plurality of bipolar electrodes in a stacking direction of the plurality of bipolar electrodes, and a negative terminal electrode disposed on the other side of the plurality of bipolar electrodes in the stacking direction,
a sealing portion that seals a pair of electrodes mutually adjacent in the stacking direction of the electrode laminate, and
a buffer region formation member that forms a buffer region sealed on an outside of the electrode laminate in the stacking direction, in which:
   each of the plurality of bipolar electrodes has
   a current collector including a positive electrode current collector foil and a negative electrode current collector foil,
   a positive electrode active material layer provided on the positive electrode current collector foil in the current collector, and
   a negative electrode active material layer provided on the negative electrode current collector foil in the current collector,
   the positive terminal electrode has
   a positive electrode current collector foil, and
   a positive electrode active material layer provided on the positive electrode current collector foil,
   the negative terminal electrode has
   a negative electrode current collector foil, and
   a negative electrode active material layer provided on the negative electrode current collector foil,
   the positive electrode current collector foil in each of the current collectors and the positive electrode current collector foil in the positive terminal electrode have
   a positive electrode coated portion on which the positive electrode active material layer is provided, and
   a positive electrode uncoated portion on which the positive electrode active material layer is not provided,
   the negative electrode current collector foil in each of the current collectors and the negative electrode current collector foil in the negative terminal electrode have
   a negative electrode coated portion on which the negative electrode active material layer is provided, and
   a negative electrode uncoated portion facing the positive electrode uncoated portion in the stacking direction and on which the negative electrode active material layer is not provided,
   the sealing portion seals a region formed between the positive electrode uncoated portion and the negative electrode uncoated portion in a state where a pressure within the region is less than atmospheric pressure, and
   the buffer region formation member forms the buffer region at a position overlapping the region in the stacking direction.

In this power storage module, since a buffer region sealed at a position overlapping in the stacking direction with a region, which is sealed in a state where a pressure thereof is lower than atmospheric pressure, is formed, and this buffer region absorbs a differential pressure between atmospheric pressure and the pressure within the region, the uncoated portions in each of the terminal electrodes are prevented from coming close to the uncoated portions in the bipolar electrode facing these uncoated portions, namely, a reduction in the volume of a gas pocket is suppressed.

### [Aspect 2]

The power storage module described in Aspect 1, in which the buffer region formation member has
a positive electrode side conductive member disposed so as to contact an outer surface of the positive electrode coated portion in the positive terminal electrode,
a positive electrode side conductive film that covers the positive electrode side conductive member,
a positive electrode side holding portion that holds a peripheral edge portion of the positive electrode side conductive film so as to form the buffer region along with the positive electrode uncoated portion of the positive terminal electrode, the positive electrode side conductive member, and the positive electrode side conductive film,
a negative electrode side conductive member disposed so as to contact an outer surface of the negative electrode coated portion in the negative terminal electrode,
a negative electrode side conductive film that covers the negative electrode side conductive member, and
a negative electrode side holding portion that holds a peripheral edge portion of the negative electrode side conductive film so as to form the buffer region along with the negative electrode uncoated portion of the negative terminal electrode, the negative electrode side conductive member, and the negative electrode side conductive film.

In this aspect, a compressive force by atmospheric pressure is absorbed by having the positive electrode side conductive film and the negative electrode side conductive film deform inwardly in the stacking direction. Accordingly, a reduction in the volume of a gas pocket is efficiently suppressed.

Moreover, since an outer surface of the power storage module in the stacking direction is formed by the positive electrode side conductive film and the negative electrode side conductive film, it becomes possible to stack a plurality of power storage modules via members having conductivity (current collector plates or the like).

### [Aspect 3]

The power storage module described in Aspect 2, further including
a positive electrode side support portion disposed between the positive electrode uncoated portion of the positive terminal electrode and the positive electrode side conductive film, and supporting the positive electrode side conductive film, and
a negative electrode side support portion disposed between the negative electrode uncoated portion of the negative terminal electrode and the negative electrode side conductive film, and supporting the negative electrode side conductive film.

In this aspect, since each conductive film is supported by each support portion, a reduction in the volume of a gas pocket is more surely suppressed.

### [Aspect 4]

The power storage module described in Aspect 1, in which the buffer region formation member has
a cover that covers the sealing portion, and
a seal portion that connects the cover to the electrode laminate,
the cover has an inside edge portion formed at a position overlapping the positive electrode coated portion and the negative electrode coated portion in the stacking direction, and the seal portion connects the inside edge portion to the electrode laminate.

In this aspect, a compressive force by atmospheric pressure is absorbed by having the part of the cover overlapping in the stacking direction with the region deform inwardly in the stacking direction.

Moreover, it becomes possible to stack a plurality of power storage modules, by disposing members having conductivity (current collector plates or the like) at the parts of each terminal electrode not covered by the cover.

Although the embodiments of the present disclosure have been described, the embodiments disclosed this time should be considered as illustrative in all aspects and not limiting. The scope of the present disclosure is indicated by the claims and it is intended that all changes within the meaning and the scope equivalent to the claims are included.

## Claims

1. A power storage module (1), comprising:
an electrode laminate (10) having a plurality of bipolar electrodes (100), a positive terminal electrode (200), and a negative terminal electrode (300);
a sealing portion (500) that seals a pair of electrodes mutually adjacent in a stacking direction of the electrode laminate; and
a buffer region formation member (600) that forms a buffer region (R2) sealed on an outside of the electrode laminate in the stacking direction, wherein
a positive electrode charge collector foil (112) in each of the bipolar electrodes and a positive electrode charge collector foil (112) in the positive terminal electrode have a positive electrode coated portion (112a) and a positive electrode uncoated portion (112b),
a negative electrode charge collector foil (113) in each of the bipolar electrodes and a negative electrode charge collector foil (113) in the negative terminal electrode have a negative electrode coated portion (113a) and a negative electrode uncoated portion (113b),
the sealing portion (500) seals a region formed between the positive electrode uncoated portion and the negative electrode uncoated portion in a state where a pressure within the region is lower than atmospheric pressure, and
the buffer region formation member (600) forms the buffer region at a position overlapping the region in the stacking direction.

2. The power storage module according to claim 1, wherein
the buffer region formation member (600) comprises:
a positive electrode side conductive member (612) disposed so as to contact an outer surface of the positive electrode coated portion in the positive terminal electrode;
a positive electrode side conductive film (622) that covers the positive electrode side conductive member;
a positive electrode side holding portion (632) that holds a peripheral edge portion of the positive electrode side conductive film so as to form the buffer region along with the positive electrode uncoated portion of the positive terminal electrode, the positive electrode side conductive member, and the positive electrode side conductive film;
a negative electrode side conductive member (613) disposed so as to contact an outer surface of the negative electrode coated portion in the negative terminal electrode;
a negative electrode side conductive film (623) that covers the negative electrode side conductive member; and
a negative electrode side holding portion (633) that holds a peripheral edge portion of the negative electrode side conductive film so as to form the buffer region along with the negative electrode uncoated portion of the negative terminal electrode, the negative electrode side conductive member, and the negative electrode side conductive film.

3. The power storage module according to claim 2, further comprising:
a positive electrode side support portion (642) disposed between the positive electrode uncoated portion of the positive terminal electrode and the positive electrode side conductive film, and supporting the positive electrode side conductive film; and
a negative electrode side support portion (643) disposed between the negative electrode uncoated portion of the negative terminal electrode and the negative electrode side conductive film, and supporting the negative electrode side conductive film.

4. The power storage module according to claim 1, wherein
the buffer region formation member (600) comprises:
a cover (650) that covers the sealing portion; and
a seal portion (660) that connects the cover to the electrode laminate,
the cover has an inside edge portion (654) formed at a position overlapping the positive electrode coated portion and the negative electrode coated portion in the stacking direction, and
the seal portion (660) connects the inside edge portion to the electrode laminate (10).
